# EUROPEAN PATENT SPECIFICATION

(11) **EP 4 126 794 B1**
(45) Date of publication and mention of the grant of the patent: **28.01.2026**
(21) Application number: 21717535.5
(22) Date of filing: 30.03.2021
(51) Int. Cl.: C05G 3/90, C05C 9/00, C05G 5/30

(54) **ZINC COATED UREA FERTILIZER**
ZINKBESCHICHTETES HARNSTOFFDÜNGEMITTEL
ENGRAIS À BASE D'URÉE ENROBÉ DE ZINC

(30) Priority: 31.03.2020 IN 202011014247
(43) Date of publication of application: 08.02.2023
(73) Proprietor: Sabic Agri-Nutrients Company, 31961 Jubail (SA)
(72) Inventor: KORIPELLY, Rajamalleswaramma, Bangalore 562125 (IN); BURLA, Satish, Bangalore 562125 (IN); GUPTA, Samik, Bangalore 562125 (IN)
(74) Representative: J A Kemp LLP
(86) International application number: PCT/IB2021/052640
(87) International publication number: WO 2021/198914

(56) References cited:
- US-A1- 2016 340 265
- US-A1- 2017 253 534

## Description

### BACKGROUND OF THE INVENTION

### A. Field of the Invention

The invention generally concerns a fertilizer granule comprising zinc (Zn) and urea. In particular, the invention concerns Zn coated urea fertilizer granules comprising a core comprising urea, and a coat comprising an organic Zn complex and an inorganic Zn compound, the coat forming a coating on an outer surface of the core, which organic zinc (Zn) complex is a chelated Zn complex comprising specific ligands.

### B. Description of Related Art

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients and to create the right balance of nutrients.

Farmers often overlook the importance of secondary nutrients and micronutrients. Among the micronutrients, zinc (Zn) has emerged as one of the most deficient nutrients in most soils. Zinc deficiency causes reduced yield, impaired quality, poor growth, poor tillering, shorter internode length, interveinal chlorosis, stunting, and/or bronzing in plants.

In the past, Zn has been supplied to plants as a fertilizer by application to the soil, foliar application, dusting of seeds with Zn powder or soaking them in Zn solutions, and dipping roots of transplanted crops in solutions or suspensions of Zn salts. Of these, soil application and foliar spray are among the most extensively used. Soil application of Zn is prophylactic, while foliar sprays are typically for therapeutic treatment. Soil application of Zn to annual crops is a preferred method over foliar sprays.

Most applications of Zn to plants or soils use inorganic based Zn, such as ZnO, ZnSO4, Zn(NO3)2, or Zn salts (US 4,565,564, US 3,941,578, US 3,617,239, AU 2015226280, CN 1165801(A), IN 262879(B), IN 201617029700(A), IN 2875KON2012(A), CN 104447010(A), CN 103695914(A)). Some have used Zn complexes in fertilizers (US 6,830,603, WO 2015/017329, AU 4557696, IN 262879(B)). Further, some have used organic chelated Zn as a source of Zn in a core of a coated fertilizer or throughout a fertilizer granule (CN 106518463(A), CN 105859388(A), CN 105837312(A), CN 105418299(A), CN 104892123(A), CN 104016798(A), CN 106631271(A), US 2017/0253534). Some have used aqueous based slurries or solutions to coat organic chelated Zn onto a fertilizer core (US 3,961,932) or acids to increase the solubility of Zn in the fertilizer (CA 2995400(A)). Foliar sprays or fertigation solutions can contain zinc-ethylenediaminetetraacetate ZnEDTA for therapeutic treatment of plants (WO 2017178342, CN 105906456(A)). However, solid fertilizers containing organic chelated Zn typically contain low amounts of Zn and liquid fertilizers can be difficult and costly to transport. Further, coating with organic chelated Zn can cause stickiness and require curing prior to bagging. Anticaking agents, synthetic calcium silicate, finely divided silica, and/or talc have been used to reduce the stickiness of the organic chelated Zn coating, but the anticaking agents and/or talc can reduce nitrogen content and decrease value addition of the coated product.

US 2016/340265 A1 discusses fertilizer capsules comprising one or more cores, wherein each of the one or more cores independently comprises one or more fertilizer additives and a binder.

Improved fertilizers that reduce cost, complexity, transport difficulties, and application burdens are still needed.

### SUMMARY OF THE INVENTION

A solution to at least some of the problems discussed above has been discovered. In some aspects, the solution resides in providing a Zn coated urea fertilizer particles containing, a coating of micronized inorganic Zn particles over an organic Zn coated urea. Addition of micronized inorganic Zn particles reduces the stickiness of the organic Zn coated urea granules. The Zn coated urea granules of the present invention have reduced stickiness, flows relatively freely, and shows relatively less reduction in nitrogen content and value addition of the coated urea product. The Zn coated urea granules of the present invention can be configured to provide Zn and nitrogen to the crops in a consistent manner. Further, the coated fertilizer can contain high concentrations of nitrogen (e.g., up to 46 wt. %) or Zn (e.g., up to 2 wt. %), or a combination thereof. These nutrients can be provided in a single application by using the coated fertilizers described herein.

The invention provides a fertilizer granule comprising: a core comprising urea; and a coat comprising an organic zinc (Zn) complex and an inorganic Zn compound, the coat forming a coating on an outer surface of the core, which organic zinc (Zn) complex is a chelated Zn complex, which chelated Zn complex comprises Zn chelated with ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bis(beta-aminoethylether) tetraacetic acid, or dihydroxyethyl glycine (DHEG), or a salt thereof, or any combination thereof, wherein: (i) the coat comprises a first coating layer comprising the organic Zn complex and a second coating layer comprising the inorganic Zn compound, wherein the first coating layer and the second coating layer form separate coating layers on the core; and/or (ii) the inorganic Zn compound is comprised in micronized particles; and/or (iii) the fertilizer granule comprises 99 wt. % to 99.9 wt. % of urea, 0.01 wt. % to 0.6 wt. % of ZnEDTA, and 0.01 wt. % to 0.2 wt. % of ZnO and/or ZnSO₄ based on the weight of the fertilizer granule; and/or (iv) the core comprises 0.02 wt. % to 0.1 wt. % of a urease inhibitor and/or 0.1 wt. % to 1 wt. % of a nitrification inhibitor, based on the weight of the core.

One aspect of the present invention is directed to a fertilizer granule. The fertilizer granule comprises a core and a coat, the coat forming a coating on an outer surface of the core. The core comprises a nitrogen fertilizer which comprises urea. The coat comprises Zn. The coat comprises an organic Zn complex and an inorganic Zn compound. The organic Zn complex is one or more chelated Zn complex(es). The chelated Zn complex comprises Zn chelated with a chelator selected from ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bisd(aminoethylether) tetraacetic acid, or dihydroxyethyl glycine (DHEG), or a salt thereof, or any combination thereof. In some particular aspects, the chelated Zn complex can be Zn chelated with EDTA (ZnEDTA). The ZnEDTA can be Zn₂EDTA and/or a ZnEDTA salt such as Na₂ZnEDTA (Disodium [[N,N'-ethylenebis[N-(carboxylatomethyl)glycinato]](⁴⁻)-N,N',O,O',ON,ON']zincate(²⁻)) and/or (NH₄)₂ZnEDTA (Diammonium [[N,N'-ethylenebis[N-(carboxylatomethyl)glycinato]](⁴⁻)-N,N',O,O',ON,ON']zincate(²⁻)). In some particular aspects, the chelated Zn complex can be Na₂ZnEDTA and/or (NH₄)₂ZnEDTA. The inorganic Zn compound can include ZnO, ZnSO₄, ZnCO₃, Zn(NO₃)₂, ZnCl₂, or any combination thereof. In some aspects, the inorganic Zn compound can be ZnO and/or ZnSO₄. The coat can be a single coating layer. The coat can include a first coating layer and a second coating layer. The first coating layer can include the organic Zn complex and the second coating layer can include the inorganic Zn compound. The first coating layer can include the inorganic Zn compound and the second coating layer can include the organic Zn complex. The first coating layer and the second coating layer can form separate coating layers over the core. At least a portion of the first coating layer can be arranged between the core and the second coating layer. In some aspects, the first coating layer can form a coating over at least a portion of the outer surface of the core to from an organic Zn coated core and the second coating layer can form a coating over at least a portion of an outer surface of the organic Zn coated core. In some aspects, the second coating layer can form an outer coating layer of the fertilizer granule. The first coating layer can include the organic Zn complex and the second coating layer can include the inorganic Zn compound, the first coating layer and the second coating layer can form separate coating layers over the core, and at least a portion of the first coating layer can be arranged between the core and the second coating layer. In some aspects, the inorganic Zn compound can include solid micronized particles of the inorganic Zn compound. In some aspects, the second coating layer can include micronized particles containing the inorganic Zn compound. In some aspects, the micronized particles can have an average diameter of 0.1 µm to 100 µm, preferably 0.3 µm to 50 µm, preferably 0.3 µm to 10 µm. In some aspects, greater than 90 % of the inorganic Zn particles have a diameter of less than 10 µm. In some aspects, greater than 50 % of the inorganic Zn particles have a diameter of greater than 2.5 µm.

The core can be of any suitable shape. Non-limiting shape includes spherical, cuboidal, cylindrical, puck shape, oval, and oblong shapes, although cores having other shapes can also be made. In some aspects, the core can be spherical. In some aspects, the core can be of cylindrical shape with a circular, elliptical, ovular, triangular, square, rectangular, pentagonal, or hexagonal cross section, although cylindrical shaped core having a cross-section of other shapes can also be made. In some aspects, the core can have a dimension such as length, width, height and/or cross-sectional diameter between 0.5 mm to 5 mm. In some aspects, the core has a diameter of 1 mm to 5 mm. In some aspects, the core can have a substantially spherical shape with an average diameter 1 mm to 5 mm.

In some aspects, the fertilizer granule can comprise 98.6 wt. % to 99.9 wt. % or 99 wt. % to 99.9 wt. % of the nitrogen fertilizer comprising urea. In some aspects, the fertilizer granule comprises 98.6 wt. % to 99.9 wt. % of urea. In some aspects, the fertilizer granule can comprise 0.01 wt. % to 0.2 wt. %, or 0.01 wt. % to 0.1 wt. %, or 0.02 wt. % to 0.08 wt. %, or 0.01 wt. % to 0.06 wt. %, or 0.04 wt. % to 0.1 wt. %, or 0.08 wt. % to 0.15 wt. % of Zn, calculated based on the total amount of atoms of Zn in the granule. In some particular aspects, the fertilizer granule can comprise 99 wt. % to 99.9 wt. % of a nitrogen containing fertilizer comprising urea, 0.01 wt. % to 0.9 wt. %, or 0.01 wt. % to 0.6 wt. %, or 0.01 wt. % to 0.05 wt. %, of an organic Zn compound such as ZnEDTA, and 0.01 wt. % to 0.2 wt. %, 0.01 to 0.3 wt. % or 0.01 wt. % to 0.1 wt. %, or 0.02 wt. % to 0.08 wt. %, or 0.12 wt. % to 0.2 wt. %, or 0.02 wt. % to 0.08 wt. % of an inorganic Zn compound such as ZnO and/or ZnSO₄. In some particular aspects, the fertilizer granule can comprise 99 wt. % to 99.9 wt. % of a nitrogen containing fertilizer comprising urea, 0.002 wt. % to 0.15 wt. %, or 0.002 wt. % to 0.1 wt. %, or 0.002 wt. % to 0.009 wt. %, of organic Zn (e.g., present as and/or provided as organic Zn complex), and 0.006 wt. % to 0.12 wt. %, or 0.006 wt. % to 0.18 wt. %, of inorganic Zn (e.g. present as and/or provided as inorganic Zn compound).

The core can optionally include a urease inhibitor and/or a nitrification inhibitor. In some aspects, the urease inhibitor can be a thiophosphoric triamide derivative, such as N-(n-butyl) thiophosphoric triamide (NBPT). In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST) or any combination thereof, preferably DCD. In some aspects, the core comprises 0.02 wt. % to 0.1 wt. % of the urease inhibitor such as NBPT, and/or 0.1 wt. % to 1 wt. % of the nitrification inhibitor such as DCD, based on the total weight of the core.

The nitrogen fertilizer comprises urea. In some particular aspects, the core can consist of or consist essentially of the nitrogen containing fertilizer. In some particular aspects, the core can consist of or consist essentially of urea.

The coated fertilizer can contain or exclude additional ingredients. The additional ingredients included or excluded can be a preservative, insecticide, fungicide, fragrance, micronutrient, fertilizer, plant growth agent, nutrient, secondary nutrient, trace element, plant protection agent, filler, colorant, etc., or a combination thereof. In some aspects, the fertilizer granule and/or the core is essentially free of i) a binder such as plaster of paris, flour, chalk powder, bleached wheat flour, starch, gluten, kaolin, bentonite, and/or colloidal silica, ii) a filler such as silica, dried distillers grains with solubles (DDGS), MgO, CaO, bone mill powder, chalk powder, rice husk, and/or iii) a pH buffer such as CaCO₃, Na₂CO₃, K₂CO₃, MgO, KH₂PO₄, NaHCO₃, and/or MgCO₃. In some particular aspects, the fertilizer granule can consist of or consist essentially of a nitrogen containing fertilizer comprising urea, an organic Zn compound such as ZnEDTA, and an inorganic Zn compound such as ZnO and/or ZnSO4, and optionally an urease inhibitor, and/or a nitrification inhibitor.

The fertilizer granule of the present invention can contain the components therein and/or the above referenced additional ingredients therein at any concentration, ratio, percent by weight, percent by volume, etc. In some instances, the coat contains the components therein and/or the above referenced additional ingredients therein at 0.001 wt. %, 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 20 wt. %, 25 wt. %, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. %, 90 wt. %, 95 wt. %, 100 wt. %, or any concentration or range therein, of the coat based on the total weight of the coat.

In some aspects, the coat can cover at least 10 %, 20 %, 30 %, 40 %, or 10 % to 50 % of the outer surface of the core. In other aspects, the coat can cover a majority (e.g., greater than 50 %) of the outer surface of the core. In some aspects, the coat can cover greater than 50 %, at least 60 %, at least 70 %, at least 80 %, at least 90 %, or 100 % of the outer surface of the core. In certain aspects, the coat can cover 60 % to 100 % or 80 % to 100 % or 90 % to 100 % of the outer surface of the core. In some aspects, the weight ratio of the coat to the core in the fertilizer granule can be about 0.0005:1 to 0.02:1 or 0.001:1 to 0.01:1. In some aspects, the core can make up about 98.5 % to 99.9 % or 99 % to 99.9 % of the total weight of the fertilizer granule. In some aspects, the coat can make up about 0.1 % to 1 % of the total weight of the fertilizer granule. In some aspects, the first coating layer can make up about 0.05 % to 0.9 % of the total weight of the fertilizer granule. In some aspects, the second coating layer can make up about 0.01 % to 0.1 % of the total weight of the fertilizer granule.

In some aspects, the core can be a prill or can be a granulated, pelletized, compacted, and/or agglomerated core. In some aspects, the inorganic Zn compound in not dispersed throughout the core. In some aspects, the organic Zn complex is not dispersed throughout the fertilizer core. In some aspects, the organic Zn complex penetrates the outer surface of the core but is not dispersed homogenously throughout the fertilizer core. In some instances, the coat is continuous or substantially continuous.

In some aspects, the fertilizer granule can be included in a fertilizer blend or a compounded fertilizer. The fertilizer blend or the compounded fertilizer in addition to the fertilizer granules can contain a second fertilizer granule. In some aspects, the second fertilizer granules can contain of urea, monoammonium phosphate (MAP), diammonium phosphate (DAP), muriate of potash (MOP), monopotassium phosphate (MKP), triple super phosphate (TSP), rock phosphate, single super phosphate (SSP), and like.

One aspect of the present invention is directed to a method for making the fertilizer granule disclosed herein. The method comprises forming or providing a core comprising urea, coating an outer surface of the core with an organic Zn complex to form an organic Zn coated core, and coating an outer surface of the organic Zn coated core with micronized particles comprising an inorganic Zn compound to form the fertilizer granule. A method can include forming or providing a core containing a nitrogen fertilizer such as urea, coating an outer surface of the core with an inorganic Zn compound to form an inorganic Zn coated core, and coating an outer surface of the inorganic Zn coated core with an organic Zn complex to form the fertilizer granule. The method can include forming or providing a core comprising urea, coating an outer surface of the core with a mixture of an inorganic Zn compound and an organic Zn complex to form the fertilizer granule.

In some aspects, the core can be coated with an aqueous solution containing the organic Zn complex to form the organic Zn coated core. In some aspects, the aqueous solution can comprise1 wt. % to 20 wt. % or 5 wt. % to 15 wt. % or 2 wt. % to 8 wt. % or 12 wt. % to 18 wt. % of the organic Zn complex. In some aspects, the aqueous solution can have a pH of 6 to 8. In some aspects, the aqueous solution can be sprayed on the outer surface of the core to form the organic Zn coated core or on the inorganic Zn coated core to form the fertilizer granule. In some aspects, the inorganic Zn compound is coated as micronized particles. The organic Zn coated core is coated with micronized particles comprising the inorganic Zn compound to form the fertilizer granule. In some aspects, the core can be coated at an ambient temperature and/or pressure.

In some aspects, the core can be formed as a prill or by pelletizing, compacting, and/or granulating a composition containing a nitrogen fertilizer comprising urea and optionally a urease inhibitor and/or a nitrification inhibitor. In some aspects, the core can be coated with 1 kg to 5 kg of the organic Zn complex solution per ton of the nitrogen fertilizer in the core. In some aspects, the organic Zn coated core can be coated with 0.1 kg to 3 kg of the inorganic Zn compound per ton of nitrogen fertilizer in the core. In some aspects, the core can be coated with 0.1 kg to 0.5 kg, of the organic Zn complex per ton of the nitrogen fertilizer in the core. In some aspects, the core can be coated with 0.02 kg to 0.09 kg, of the organic Zn (e.g. provided as organic Zn complex) per ton of the nitrogen fertilizer in the core. In some aspects, the organic Zn coated core can be coated with 0.06 kg to 1.8 kg of the inorganic Zn (e.g. provided as inorganic Zn compound) per ton of nitrogen fertilizer in the core.

One aspect of the present invention is directed to a method of fertilizing, the method comprising applying the fertilizer granule or a fertilizer blend or compounded fertilizer containing the fertilizer granule to at least a portion of a soil, a crop, or the soil and the crop. Also disclosed is a method of enhancing plant growth comprising applying to soil, the plant, or the soil and the plant an effective amount of a composition comprising a fertilizer blend of the present invention.

In the context of the present invention, fertilizer granules and/or fertilizer blend granules may also be referred to as a particle, granule, fertilizer particle, prill, or fertilizer prill.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, but not limited to biostimulants, urease inhibitors, and nitrification inhibitors. Fertilizer granules of the present invention comprise urea, such as urea granules or prills.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "aqueous based," "aqueous base," "water based," and "water base" are defined as containing water or was previously contained in water before drying.

The term "organic chelated zinc" or "organic chelated Zn" refers to Zn that is chelated to an organic molecule, the organic molecule comprising carbon.

The term "inorganic zinc" or ""inorganic Zn" refers to Zn that is not chemically bound or chelated to an organic molecule, the organic molecule comprising carbon. Non-limiting examples include Zn ions, non-ionic Zn metal, ZnO, ZnSO₄, Zn(NO₃)₂, or Zn salts.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" can include "and" or "or." To illustrate, A, B, and/or C can include: A alone, B alone, C alone, a combination of A and B, a combination of A and C, a combination of B and C, or a combination of A, B, and C.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

Other objects, features and advantages of the present invention will become apparent from the following figures, detailed description, and examples. It should be understood, however, that the figures, detailed description, and examples, while indicating specific embodiments of the invention, are given by way of illustration only. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings. While the invention is susceptible to various modifications and alternative forms, specific embodiments thereof are shown by way of example in the drawings. The drawings may not be to scale.
**FIG.** 1 A fertilizer granule according an example of the present invention.
**FIG.** 2 illustrates a flowchart of a method for producing a fertilizer granule according to an example of the present invention.
**FIG.** 3 illustrates a schematic of a system for producing a fertilizer granule according to an example of the present invention.

### DETAILED DESCRIPTION OF THE INVENTION

The fertilizer blend of the present invention comprises the Zn coated urea containing fertilizer granules of the present invention. As illustrated in a non-limiting manner in Example 1, it was found that coating an organic Zn complex coated urea containing core with micronized particles containing an inorganic Zn compound, reduced the stickiness and curing time prior bagging of the granules and increased the processibility of the granules. Relatively less reduction in nitrogen content and decrease in value addition of the product is obtained with the compositions and methods of the present invention.

These and other non-limiting aspects of the present invention are discussed in further detail in the following sections.

### A. Fertilizer Granules

The fertilizer granule comprises a core and a coat forming a coating on the outer surface of the core. The fertilizer granule can contain 99 wt. % to 99.9 wt. % of the core e.g. the core comprises 99 wt. % to 99.9 wt. % of the fertilizer granule. The core comprises a nitrogen containing fertilizer comprising urea. In some aspects, the core can contain 98.9 wt. % to 100 wt. % or at least any one of, equal to any one of, or between any two of 98.9 wt. %, 99 wt. %, 99.1 wt. %, 99.2 wt. %, 99.3 wt. %, 99.4 wt. %, 99.5 wt. %, 99.6 wt. %, 99.7 wt. %, 99.8 wt. %, 99.9 wt. %, and 100 wt. % of a nitrogen containing fertilizer comprising urea, based on the weight of the core. The core can optionally contain a urease inhibitor and/or a nitrification inhibitor. In some aspects, the urease inhibitor can be a thiophosphoric triamide derivative, such as N-(n-butyl) thiophosphoric triamide (NBPT). In some aspects, the core can contain 0.02 wt. % to 0.1 wt. % or at least any one of, equal to any one of, or between any two of 0, 0.02 wt. %, 0.03 wt. %, 0.04 wt. %, 0.05 wt. %, 0.06 wt. %, 0.07 wt. %, 0.08 wt. %, 0.09 wt. %, and 0.1 wt. % of the urease inhibitor such as NBPT, based on the weight of the core. In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5-Ethoxy-3-trichloromethyl -1, 2, 4-thiadiazol (Terrazole), 2-Amino-4-chloro-6-methylpyrimidine (AM), 2-Mercapto-benzothiazole (MBT), or 2-Sulfanimalamidothiazole (ST) or any combination thereof, preferably DCD. In some aspects, the core can contain 0.1 wt. % to 1 wt. % or at least any one of, equal to any one of, or between any two of 0 wt. %, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, and 1 wt. % of the nitrification inhibitor such as DCD, based on the weight of the core. In some aspects, the core does not contain or is substantially free of a binder, filler, pH buffer, urease inhibitor, and/or nitrification inhibitor. In some aspects, the core consist of or essentially consists of urea.

The core can be of any suitable shape. Non-limiting shape includes spherical, cuboidal, cylindrical, puck shape, oval, and oblong shapes. In some aspects, the core can be of cylindrical shape with a circular, elliptical, ovular, triangular, square, rectangular, pentagonal, or hexagonal cross section, although cylindrical shaped core having a cross-section of other shapes can also be made. In some aspects, the core can have a dimension such as length, width, height and/or cross-sectional diameter between 0.5 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm. In some particular aspects, the core can have a substantially spherical shape with an average diameter 1 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm.

The fertilizer granule can contain 0.1 wt. % to 1 wt. % of the coat e.g. the coat comprises 0.1 wt. % to 1 wt. % of the fertilizer granule. The coat can contain Zn. The coat can contain a single coating layer or at least two coating layers, a first coating layer and a second coating layer. The first and the second coating layer can form separate coating layers on the core. The first coating layer can form a coating over at least a portion of an outer surface of the core. In some aspects, the first coating layer can form a relatively uniform coating layer over the core. The second coating layer can form a coating over at least a portion of an outer surface of the first coating layer coated core. At least a portion of the first coating layer can be positioned between the core and the second coating layer. In some aspects, the second coating layer can form an outer coating layer of the fertilizer granule.

The core can be coated by a single coating layer containing a mixture of an organic Zn complex and an inorganic Zn compound. When there are two or more coat layers, the first coating layer can contain either one or more organic Zn complex or one or more inorganic Zn compound and the second coating layer can contain the other. In some aspects, the first coating layer can include one or more chelated Zn complex(es) and the second coating layer can comprise one or more inorganic Zn compound. The organic Zn complex is a chelated Zn complex. The chelated Zn complex comprise Zn chelated with a chelator selected from ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bisd(aminoethylether) tetraacetic acid, or dihydroxyethyl glycine (DHEG), or a salt thereof, or any combination thereof. In some particular aspects, the chelated Zn complex can be Zn chelated with EDTA (ZnEDTA). The ZnEDTA can be Zn₂EDTA and/or a ZnEDTA salt such as Na₂ZnEDTA and/or (NH₄)₂ZnEDTA. In some particular aspects, the chelated Zn complex can be Na₂ZnEDTA and/or (NH₄)₂ZnEDTA. In some aspects, the first coating layer can include one or more chelated Zn complex(es). The second coating layer can contain an inorganic Zn compound. In some aspects, the second coating layer can contain micronized particles containing the inorganic Zn compound. In some aspects, the inorganic Zn compound can include ZnO, ZnSO₄, ZnCO₃, Zn(NO₃)₂, ZnCl₂, or any combination thereof. In some aspects, the inorganic Zn compound can be ZnO, and/or ZnSO₄. In some aspects, the micronized particles can have an average size e.g. an average diameter of 0.1 µm to 100 µm, or 0.3 µm to 50 µm, or 0.3 µm to 30 µm or at least any one of, equal to any one of, or between any two of 0.1 µm, 0.3 µm, 0.5 µm, 1 µm, 2 µm, 4 µm, 6 µm, 8 µm, 10 µm, 15 µm, 20 µm, 25 µm, 30 µm, 35 µm, 40 µm, 50 µm, 60 µm, 70 µm, 80 µm, and 100 µm. In some aspects, the coat does not contain or is substantially free of a binder, filler, pH buffer, talc, anticaking agent, urease inhibitor, and/or nitrification inhibitor. In some aspects, the molar ratio of the organic Zn complex and the inorganic Zn compound in the coat and the fertilizer granule can be 0.75:1 to 1.25:1 or at least any one of, equal to any one of, or between any two of 0.75:1, 0.8:1, 0.85:1, 0.9:1, 0.95:1, 1:1, 1.05:1, 1.1:1, 1.15:1, 1.2:1, and 1.25:1.

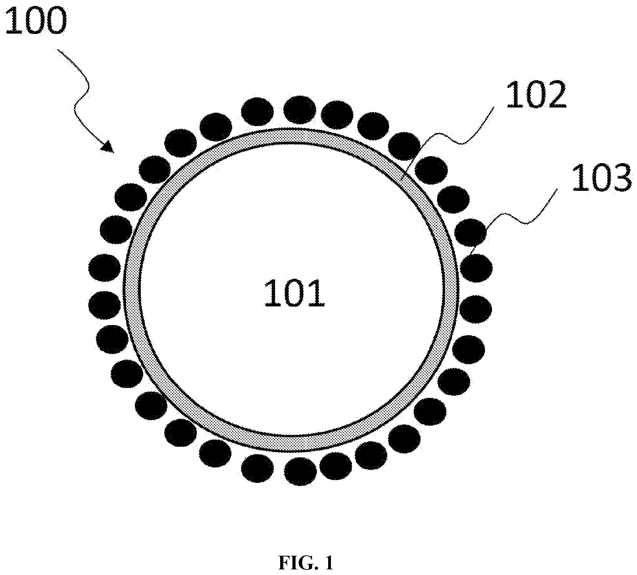

The first coating layer can cover 5, 10, 15, 20, 25, 30, 35, 40, 45, 50, 55, 60, 65, 70, 75, 80, 85, 90, 95, 99, 100 % of the outer surface of the core. The second coating layer can cover 5, 10, 15, 20, 25, 30, 35, 40, 45, 50, 55, 60, 65, 70, 75, 80, 85, 90, 95, 99, 100 % of the outer surface of the first coating layer core. The coat overall can cover 5, 10, 15, 20, 25, 30, 35, 40, 45, 50, 55, 60, 65, 70, 75, 80, 85, 90, 95, 99, 100 % of the outer surface of the core. FIG. 1 shows a fertilizer granule 100 according an example of the present invention, containing a core 101, an organic Zn complex containing first coating layer 102 coating an outer surface of the core, and a second coating layer 103 containing micronized particles containing inorganic Zn coating an outer surface of the first coating layer coated core. The first coating layer 102 is represented as covering the entire outer surface of the core **101,** although fertilizer granules with the first coating layer 102 covering a portion of the outer surface of the core can readily be made. The second coating layer 103 is represented as covering the entire outer surface of the first coating layer coated core, although fertilizer granules with second layer coating layer 103 covering a portion of the outer surface of the first coating layer coated core can readily be made.

In some particular aspects, the fertilizer granule can contain 98.6 wt. % to 99.9 wt. % or at least any one of, equal to any one of, or between any two of 98.6 wt. %, 99 wt. %, 99.1 wt. %, 99.2 wt. %, 99.3 wt. %, 99.4 wt. %, 99.5 wt. %, 99.6 wt. %, 99.7 wt. %, 99. 8 wt. % and 99. 9 wt. % of the nitrogen fertilizer comprising urea of the fertilizer granule, and 0.01 wt. % to 0.2 wt. % or at least any one of, equal to any one of, or between any two of 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, 0.1 wt. %, 0.11 wt. %, 0.12 wt. %, 0.13 wt. %, 0.14 wt. %, 0.15 wt. %, 0.16 wt. %, 0.17 wt. %, 0.18 wt. %, 0.19 wt. %, and 0.2 wt. % of Zn, calculated using the total amount of atoms of zinc in the fertilizer granule.

In some aspects, the fertilizer granule can contain i) 99 wt. % to 99.9 wt. % or at least any one of, equal to any one of, or between any two of 99 wt. %, 99.1 wt. %, 99.2 wt. %, 99.3 wt. %, 99.4 wt. %, 99.5 wt. %, 99.6 wt. %, 99.7 wt. %, 99. 8 wt. % and 99.9 wt. % of urea, ii) 0.01 wt. % to 0.9 wt. % or at least any one of, equal to any one of, or between any two of 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, 0.1 wt. %, 0.2 wt. %, 0.3 wt. %, 0.4 wt. %, 0.5 wt. %, 0.6 wt. %, 0.7 wt. %, 0.8 wt. %, and 0.9 wt. % of the organic Zn complex, such as ZnEDTA and iii) 0.01 wt. % to 0.2 wt. % or 0.01 wt. % to 0.3 wt. % or, at least any one of, equal to any one of, or between any two of 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, 0.1 wt. %, 0.11 wt. %, 0.12 wt. %, 0.13 wt. %, 0.14 wt. %, 0.15 wt. %, 0.16 wt. %, 0.17 wt. %, 0.18 wt. %, 0.19 wt. %, 0.2 wt. %, 0.21 wt. %, 0.22 wt. %, 0.23 wt. %, 0.24 wt. %, 0.25 wt. %, 0.26 wt. %, 0.27 wt. %, 0.28 wt. %, 0.29 wt. %, and 0.3 wt. % of the inorganic Zn compound such as ZnO and/or ZnSO₄. In some aspects, the fertilizer granule can contain i) 99 wt. % to 99.9 wt. % or at least any one of, equal to any one of, or between any two of 99 wt. %, 99.1 wt. %, 99.2 wt. %, 99.3 wt. %, 99.4 wt. %, 99.5 wt. %, 99.6 wt. %, 99.7 wt. %, 99. 8 wt. % and 99.9 wt. % of urea, ii) 0.002 wt. % to 0.15 wt. % or at least any one of, equal to any one of, or between any two of 0.002 wt. %, 0.003 wt. %, 0.004 wt. %, 0.005 wt. %, 0.006 wt. %, 0.007 wt. %, 0.008 wt. %, 0.009 wt. %, 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, 0.1 wt. %, 0.11 wt. %, 0.12 wt. %, 0.13 wt. %, 0.14 wt. %, and 0.15 wt. % of the organic Zn (e.g., present as and/or provided as organic Zn complex) and iii) 0.006 wt. % to 0.18 wt. % or at least any one of, equal to any one of, or between any two of 0.006 wt. %, 0.007 wt. %, 0.008 wt. %, 0.009 wt. %, 0.01 wt. %, 0.02 wt. %, 0.03 wt. %, 0.04 wt. %, 0.05 wt. %, 0.06 wt. %, 0.07 wt. %, 0.08 wt. %, 0.09 wt. %, %, 0.1 wt. %, 0.11 wt. %, 0.12 wt. %, 0.13 wt. %, 0.14 wt. %, 0.15 wt. %, 0.16 wt. %, 0.17 wt. %, and 0.18 wt. % of the inorganic Zn (e.g. present as and/or provided as inorganic Zn compound).

In some aspects, the core and/or coat contains a filler, binder, and/or pH buffer. In some aspects, the core and/or coat contains, based on total weight of the core and/or coat respectively, less than 0.5 wt. % or less than 0.1 wt. % or is substantially free of a filler such as each of silica, dried distillers grains with solubles (DDGS), CaCO₃, MgO, CaO, bone mill powder, and rice husk. In some aspects, the core and/or coat contains based on total weight of the core and/or coat respectively less than 0.5 wt. % or less than 0.1 wt. % or is substantially free of a binder such as each of plaster of paris, flour, chalk powder, bleached wheat flour, starch, gluten, kaolin, bentonite, and colloidal silica. In some aspects, core and/or coat contains based on total weight of the core and/or coat respectively less than 0.5 wt. % or less than 0.1 wt. % or is substantially free of a pH buffer such as each of CaCO₃, Na₂CO₃, K₂CO₃, MgO, KH₂PO₄, NaHCO₃, and/or MgCO₃.

In some aspects, additional fertilizer substances besides urea can be included or excluded in the core of the fertilizer granules. If included, additional fertilizers can be chosen based on the particular needs of certain types of soil, climate, or other growing conditions to maximize the efficacy of the fertilizer granule in enhancing plant growth and crop yield. Additional additives may also be included or excluded in the fertilizer granules. Non-limiting examples of additives that can be included or excluded from the fertilizer granules of the present invention include micronutrients, additional nitrogen nutrients, and/or secondary nutrients. A micronutrient is a botanically acceptable form of an inorganic or organometallic compound such as boron, copper, iron, chloride, manganese, molybdenum, nickel, or zinc. An additional nitrogen nutrient is a nutrient other than urea can deliver nitrogen to a plant. In some aspects, the additional nitrogen nutrient can include ammonium nitrate, ammonium sulfate, diammonium phosphate, monoammonium phosphate, urea-formaldehyde, ammonium chloride, and potassium nitrate. A secondary nutrient is a substance that can deliver calcium, magnesium, and/or sulfur to a plant. In some aspects, the secondary nutrients may include lime, gypsum, superphosphate, or a combination thereof.

The core of the fertilizer granules can have desirable physical properties such as desired levels of abrasion resistance, granule strength, pelletizability, hygroscopicity, granule shape, and size distribution, which are important properties for the fertilizer core.

The fertilizer granules described herein can be comprised in a composition useful for application to soil. In addition to the fertilizer granules, the composition may include other fertilizer compounds, micronutrients, primary nutrients, additional urea, additional nitrogen nutrients, insecticides, herbicides, or fungicides, or combinations thereof.

The fertilizer granules described herein can also be included in a blended composition comprising other fertilizer granules. The other fertilizer granules can be granules of urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate and like.

### B. Method of Making a Fertilizer Granule

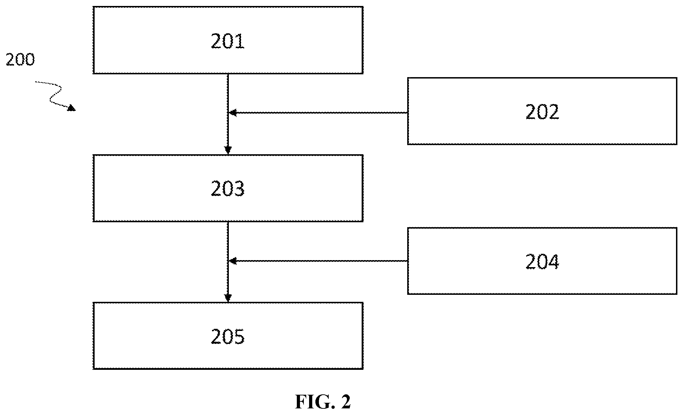

The method for making a fertilizer granule includes providing or forming a core comprising urea, coating an outer surface of the core with an organic Zn complex to form an organic Zn coated core, e.g. first coating layer coated core, and coating an outer surface of the organic Zn coated core with micronized particles comprising an inorganic Zn compound to form the fertilizer granule. In certain aspects, at least a portion of the outer surface of the core can be contacted with a solution containing the organic Zn complex. In certain aspects, the solution can be an aqueous solution containing 1 wt. % to 20 wt. %, or at least any one of, equal to any one of, or between any two of 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. % and 20 wt. % of the organic Zn complex, such as ZnEDTA. In certain aspects, pH of the aqueous solution can be 6 to 8. In certain aspects, micronized particles containing the inorganic Zn compound can be contacted with the at least a portion of the outer surface of the organic Zn coated core to form the fertilizer granule. In some aspects, the core can be contacted e.g. with 1 kg to 5 kg or at least any one of, equal to any one of, or between any two of 1 kg, 2 kg, 3 kg, 4 kg, and 5 kg of the organic Zn complex solution per ton of nitrogen fertilizer comprising urea in the core. In some aspects, the core can be contacted with 0.1 kg to 0.5 kg, or at least any one of, equal to any one of, or between any two of 0.1, 0.15, 0.2, 0.25, 0.3, 0.35, 0.4, 0.45, and 0.5 kg, of the organic Zn complex per ton of the nitrogen fertilizer in the core. In some aspects, the core can be contacted with 0.02 kg to 0.09 kg, or at least any one of, equal to any one of, or between any two of 0.02, 0.03, 0.04, 0.05, 0.06, 0.07, 0.08, and 0.09 kg of the organic Zn (e.g. provided as organic Zn complex) per ton of the nitrogen fertilizer in the core. In some aspects, the organic Zn coated core can be contacted e.g. coated with 0.1 kg to 2 kg or 0.1 kg to 3 kg or at least any one of, equal to any one of, or between any two of 0.1 kg, 0.2 kg, 0.3 kg, 0.4 kg, 0.5 kg, 0.6 kg, 0.7 kg, 0.8 kg, 0.9 kg, 1 kg, 1.1 kg, 1.2 kg, 1.3 kg, 1.4 kg, 1.5 kg, 1.6 kg, 1.7 kg, 1.8 kg, 1.9 kg, 2 kg, 2.1 kg, 2.2 kg, 2.3 kg, 2.4 kg, 2.5 kg, 2.6 kg, 2.7 kg, 2.8 kg, 2.9 kg, and 3 kg of the inorganic Zn compound for per ton of nitrogen fertilizer comprising urea in the core. In some aspects, the organic Zn coated core can be contacted e.g. coated with 0.06 kg to 1.8 kg or at least any one of, equal to any one of, or between any two of 0.06 kg, 0.07 kg, 0.08 kg, 0.09 kg, 0.1 kg, 0.2 kg, 0.3 kg, 0.4 kg, 0.5 kg, 0.6 kg, 0.7 kg, 0.8 kg, 0.9 kg, 1 kg, 1.1 kg, 1.2 kg, 1.3 kg, 1.4 kg, 1.5 kg, 1.6 kg, 1.7 kg, and 1.8 kg of the inorganic Zn (e.g. provided as inorganic Zn compound) for per ton of nitrogen fertilizer comprising urea in the core. FIG. 2 shows a flow chart of a method **200** for making a fertilizer granule according to an example of the present invention. Referring to FIG. 2, a urea granule **201** can be coated with a solution containing an organic Zn complex **202** to form an organic Zn coated core **203,** the organic Zn coated core **203** can be coated with micronized particles containing an inorganic Zn complex **204** to form a Zn coated urea fertilizer granule **205.**

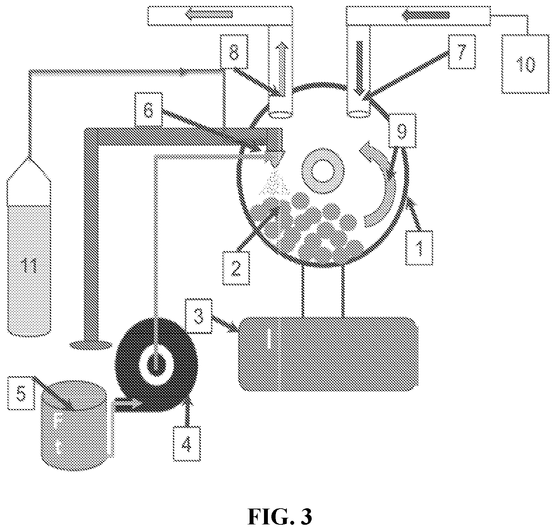

In some particular aspects, a core in a form of urea prills or granules of size 1 mm to 5 mm can be provided in a container, such as a drum coater. An aqueous solution containing 5 wt. % to 15 wt. % of an organic Zn complex such as ZnEDTA can be sprayed on the urea granules in the container to form the organic Zn coated core e.g. ZnEDTA coated urea. Micronized particles containing an inorganic Zn compound such as ZnO and/or ZnSO₄ can be added to the container to coat the ZnEDTA coated urea with the micronized particles. In some aspects, the container e.g. drum can be rotated at 10 to 40 RPM during coating of the organic Zn complex and/or the inorganic Zn compound to relatively evenly distribute the organic Zn complex and/or inorganic Zn compound over the outer surfaces of the nitrogen fertilizer containing core and/or ZnEDTA coated nitrogen fertilizer, respectively. **FIG. 3** illustrates a schematic of a system for producing a fertilizer granule according to an example of the present invention. Referring to FIG. 3, **1** is a pam drum, **2** are Zn coated urea granules, **3** is a motor gear box, **4** is a peristatic pump, **5** is a feed tank, **6** is a spray nozzle, **7** is a hot air inlet, **8** is an air exhaust system, **9** shows rotation of pan drum **1, 10** is a temperature controller, and **11** is an atomizing spray.

The core can be a prill or formed by granulating, pelletizing, compacting, and/or extruding a composition containing the core ingredients such as urea and optionally a urease inhibitor and/or a nitrification inhibitor.

In some aspects, the granulation process of core formation can include granulating a powder composition containing the core ingredients.

In some aspects, the pelletizing process of core formation can include forming a powdered composition containing the core ingredients and pressing the powdered composition through a die to form a pelletized core of a desired shaped. The pelletizing process can be performed using a pelletizing press known in the art. In some aspects, the core ingredients can be mixed in a mixer, such as a turbo mixer to form the powdered composition, the powdered composition from the mixer can be fed to a screw feeder connected to a pelletizing press. In some aspects, the powdered composition can be fed to the screw feeder at a rate 40 kg/hr to 100 kg/h, or 50 kg/hr to 80 kg/h. In some aspects, the pelletizing press can include twin rollers rotating at a speed 150 to 200 RPM and the powdered composition can be pressed through the die by the rollers.

In some aspects, the compacting process of core formation can include, forming a powdered composition by mixing the core ingredients in dry form, compacting the powdered composition to form a compacted composition and crushing, grinding, and/or granulating the compacted composition to form the core of desired shape and size. The compacting process can be done using a roller compactor known in the art. In some aspects, the powdered composition can be compacted by feeding the powdered composition into a roller compactor containing a rotating roller and a roller in immobile phase, and forming a compacted composition in form of a sheet from the powdered composition.

In some aspects, the extrusion process of core formation can include, forming a extrudable composition containing the core ingredients, and extruding the extrudable composition. The method may also include a drying step after extruding to remove solvent that may have been added to make the composition extrudable. In some aspects, the extrudable composition can be formed by the core ingredients in dry form and adding any solvent, if needed. In some aspects, the solvent can be water. The extrusion can be done using suitable extruder apparatus known in the art and can be performed at a temperature between 0 °C and 150 °C and a screw speed from 1 to 500 rpm, wherein the extruder comprises a multi-feeder comprising extrusion components including a main drive, shaft, screw, barrel, and/or die.

### C. Methods of Using Fertilizer Granules

The fertilizer granule(s) and fertilizer blend comprising the fertilizer granule(s) of the present invention can be used in methods of increasing the amount of i) nitrogen and ii) Zn in soil and of enhancing plant growth. Such methods can include applying to the soil an effective amount of a composition comprising the fertilizer granule(s) of the present invention. The method may include increasing the growth and yield of crops, trees, ornamentals, etc. such as, for example, palm, coconut, rice, wheat, corn, barley, oats, and soybeans. The method can include applying the fertilizer blend of the present invention to at least one of a soil, an organism, a liquid carrier, a liquid solvent, etc.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the fertilizer granule(s) of the present invention can be ascertained by measuring the amount of nitrogen and Zn in the soil at various times after applying the fertilizer composition to the soil. It is understood that different soils have different characteristics, which can affect the stability of the nitrogen in the soil. The effectiveness of a fertilizer composition can also be directly compared to other fertilizer compositions by doing a side-by-side comparison in the same soil under the same conditions.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### Fertilizer Granule Preparation

Zn coated urea fertilizer granules were formed in a drum coater system. A series of coating studies were done to evaluate the processibility of coating material and addition of dry powders to mitigate the stickiness of the coated product.

A lab scale drum coater with a capacity of 200 grams to 2 kilograms with a drum interchanging facility based on the required volume was used. The drum contained four baffles 1.27 cm (0.5 inch) in height and 2.54 cm (1 inch) in width across the drum length. The baffles were placed at 45 ° angles from the center. The drum coater system worked in manual and automatic mode starting from feeding, pumping, spraying, exhausting, drying, and discharge the coated material. Based on the formulation desired, the required amount of sieved (> 1.00 mm and < 4.00 mm) granular urea was weighed and fed into the drum. Then the drum was rotated at 15 to 20 RPM for 5 minutes. The drum coating process was performed in a batch process. (NH₄)₂ZnEDTA and inorganic Zn (ZnO and ZnSO₄) based powder were obtained from commercial sources as raw materials for the coating process. An aqueous ZnEDTA solution containing 9 wt. % of (NH₄)₂ZnEDTA was obtained. The pH of the solution was 6-8. The ZnEDTA solution was pumped using a peristatic pump into the drum containing urea. The pump was connected with a spray nozzle with orifice design, which atomized the solution by compressed air. An exhaust pipe line on the top of the drum took off the compressed air. The solution was sprayed with the spray nozzle on the granular urea in the drum. After spray coating, the pump was stopped and the drum was rotated for about five more minutes to ensure the dispersion of the liquid coating. Then inorganic Zn powder, containing 62 wt. % of Zn, was added into the drum. The drum rotation was continued for about 3 minutes before the coated product was collected for packing. Two experiments were performed. In one experiment (experiment 1), 2.8-3.0 kg of (NH₄)₂ZnEDTA solution for per ton of urea in the drum, and 0.5 kg of inorganic Zn powder for per ton of urea in the drum was added during the coating process. In the other experiment (experiment 2), 2.8-3.0 kg of (NH₄)₂ZnEDTA solution for per ton of urea in the drum, and 1.5 kg of inorganic Zn powder for per ton of urea in the drum was added during the coating process.

A flowchart of a method for producing a fertilizer granule according to Example 1 is shown in FIG. 2. A schematic of the coating system and process of Example 1 is shown in FIG. 3. The coating process parameters are presented in Table 1. Table 2 shows the physical properties of the urea granules, ZnEDTA coated urea, and fertilizer granule of Example 1 (inorganic Zn coated ZnEDTA coated urea). As it can be seen from Table 2, the fertilizer granules according to Example 1 show good physical properties. The coated fertilizer granules of the present invention showed higher crushing strength and reduced stickiness, compared to only ZnEDTA coated urea granules. The coated fertilizer granules of the present invention is expected to require reduced or no curing time prior to bagging.

**Table 1: Coating process parameters**

| Process parameters: | |
|---|---|
| Drum RPM | 20 |
| Spray nozzle diameter | 2 mm |
| Spray rate | 8 ml/min |
| Spray nozzle type | orifice |
| Number of openings in orifice | 6 |
| Spray nozzle distance from the coating bed | 300 to 600 mm |
| Atomizing air pressure | 0.1 bar |

**Table 2: Physical properties of the urea granules, ZnEDTA coated urea, and fertilizer granule of Example 1**

| Sample ID | Crushing strength (Kgf) | Weight loss due to Abrasion (wt %) | Moisture content (wt %) |
|---|---|---|---|
| Urea granules | 2.920 | 0.012 | 0.336 |
| ZnEDTA coated Urea | 2.381 | 0.042 | 0.653 |
| Fertilizer granules of example 1-experiment 1, (Inorganic Zn and ZnEDTA coated Urea ) | 2.547 | 0.045 | 0.477 |
| Fertilizer granules of example 1-experiment 2, (Inorganic Zn and ZnEDTA coated Urea ) | 2.70 | 0.050 | 0.336 |

## Claims

1. A fertilizer granule comprising:
a core comprising urea; and
a coat comprising an organic zinc (Zn) complex and an inorganic Zn compound, the coat forming a coating on an outer surface of the core, which organic zinc (Zn) complex is a chelated Zn complex, which chelated Zn complex comprises Zn chelated with ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bis(beta-aminoethylether) tetraacetic acid, or dihydroxyethyl glycine (DHEG), or a salt thereof, or any combination thereof;
wherein:
i) the coat comprises a first coating layer comprising the organic Zn complex and a second coating layer comprising the inorganic Zn compound, wherein the first coating layer and the second coating layer form separate coating layers on the core; and/or
ii) the inorganic Zn compound is comprised in micronized particles; and/or
iii) the fertilizer granule comprises 99 wt. % to 99.9 wt. % of urea, 0.01 wt. % to 0.6 wt. % of ZnEDTA, and 0.01 wt. % to 0.2 wt. % of ZnO and/or ZnSO₄ based on the weight of the fertilizer granule; and/or
iv) the core comprises 0.02 wt. % to 0.1 wt. % of a urease inhibitor and/or 0.1 wt. % to 1 wt. % of a nitrification inhibitor, based on the weight of the core.

2. The fertilizer granule of claim 1, wherein the inorganic Zn compound comprises ZnO, ZnSO₄, ZnCO₃, Zn(NO₃)₂, ZnCl₂, or any combination thereof, preferably ZnO and/or ZnSO₄.

3. The fertilizer granule of claim 1 to 2, wherein:
the coat comprises a first coating layer comprising the organic Zn complex and a second coating layer comprising the inorganic Zn compound, wherein the first coating layer and the second coating layer form separate coating layers on the core; and
at least a portion of the first coating layer is arranged between the core and the second coating layer.

4. The fertilizer granule of any one of claims 1 to 3, wherein:
the inorganic Zn compound is comprised in micronized particles; and
the micronized particles have an average diameter of 0.1 µm to 100 µm, preferably 0.3 µm to 50 µm.

5. The fertilizer granule of any one of claims 1 to 4, wherein the core has a diameter of 1 mm to 5 mm.

6. The fertilizer granule of any one of claims 1(i), 1(ii), 1(iv) and 2 to 5 comprising 98.6 wt. % to 99.9 wt. % of urea.

7. The fertilizer granule of any one of claims 1 to 6, comprising 0.01 wt. % to 0.2 wt. % of Zn, calculated using the total amount of Zn atoms in the granule.

8. The fertilizer granule of any one of claims 1 to 7, wherein the organic zinc (Zn) complex is (NH₄)₂ZnEDTA (Diammonium [[N,N'-ethylenebis[N-(carboxylatomethyl)glycinato]](⁴⁻)-N,N',O,O',ON,ON']zincate(²⁻)) and/or (Na)₂ZnEDTA (Disodium [[N,N'-ethylenebis[N-(carboxylatomethyl)glycinato]](4-)-N,N',O,O',ON,ON']zincate(2-)).

9. The fertilizer granule of any one of claims 1 to 8, comprising 99 wt. % to 99.9 wt. % of urea, 0.01 wt. % to 0.6 wt. % of ZnEDTA, and 0.01 wt. % to 0.2 wt. % of ZnO and/or ZnSO₄.

10. The fertilizer granule of any one of claims 1 to 9, wherein the core further comprises an urease inhibitor, and/or a nitrification inhibitor.

11. The fertilizer granule of any one of claims 1 to 10, wherein:
the core comprises 0.02 wt. % to 0.1 wt. % of a urease inhibitor, and/or 0.1 wt. % to 1 wt. % of a nitrification inhibitor, based on the weight of the core; and
the urease inhibitor comprises N-(n-butyl) thiophosphoric triamide (NBPT) and/or the nitrification inhibitor comprises dicyandiamide (DCD).

12. A fertilizer blend or a compounded fertilizer comprising the fertilizer granule of any one of claims 1 to 11.

13. A method of making the fertilizer granule of any one of claims 1 to 11, the method comprising:
forming or providing a core comprising urea;
coating an outer surface of the core with an organic Zn complex to form an organic Zn coated core; and
coating an outer surface of the organic Zn coated core with micronized particles comprising an inorganic Zn compound to form the fertilizer granule.

14. The method of claim 13, wherein an aqueous solution comprising 1 wt. % to 20 wt. % of the organic Zn complex is coated on the outer surface of the core to form the organic Zn coated core.

15. A method of fertilizing, the method comprising applying a fertilizer granule of any one of claims 1 to 11 or the fertilizer blend or compounded fertilizer of claim 12 to at least a portion of a soil, a crop, or the soil and the crop.

## Patentansprüche

1. Düngemittelgranulat, das enthält:
einen Harnstoff enthaltenden Kern; und
einen Überzug, der einen organischen Zink (Zn)-Komplex und eine anorganische Zn-Verbindung enthält, wobei der Überzug eine Beschichtung auf einer äußeren Oberfläche des Kerns bildet, wobei der organische Zink (Zn)-Komplex ein chelatierter Zn-Komplex ist, wobei der chelatisierte Zn-Komplex Zn enthält, das mit Ethylendiamintetraessigsäure (EDTA), Nitrilotriessigsäure (NTA), Hydroxyethylendiamintriessigsäure (HEDTA), Diethylentriaminpentaessigsäure (DTPA), 1,2-Diaminocyclohexantetraessigsäure (DCTA), Ethylendiamindi-o-(hydroxyphenylessigsäure) (EDDHA), Ethylenglykol-bis-(beta-Aminoethylether)-tetraessigsäure, oder Dihydroxyethylglycin (DHEG) oder einem Salz davon oder einer Kombination davon chelatisiert ist;
wobei:
i) der Überzug eine erste Beschichtungsschicht enthält, die den organischen Zn-Komplex enthält, und eine zweite Beschichtungsschicht, die die anorganische Zn-Verbindung enthält, wobei die erste Beschichtungsschicht und die zweite Beschichtungsschicht getrennte Beschichtungsschichten auf dem Kern bilden; und/oder
ii) die anorganische Zn-Verbindung in mikronisierten Teilchen enthalten ist; und/oder
iii) das Düngemittelgranulat 99 Gew.-% bis 99,9 Gew.-% Harnstoff, 0,01 Gew.-% bis 0,6 Gew.-% ZnEDTA und 0,01 Gew.-% bis 0,2 Gew.-% ZnO und/oder ZnSO₄, bezogen auf das Gewicht des Düngemittelgranulats, enthält; und/oder iv) der Kern 0,02 Gew.-% bis 0,1 Gew.-% eines Ureaseinhibitors und/oder 0,1 Gew.-% bis 1 Gew.-% eines Nitrifikationsinhibitors, bezogen auf das Gewicht des Kerns, enthält.

2. Düngemittelgranulat nach Anspruch 1, wobei die anorganische Zn-Verbindung ZnO, ZnSO₄, ZnCO₃, Zn(NO₃)₂, ZnCl₂ oder eine beliebige Kombination davon, vorzugsweise ZnO und/oder ZnSO₄, enthält.

3. Düngemittelgranulat nach Anspruch 1 bis 2, wobei:
der Überzug eine erste Beschichtungsschicht enthält, die den organischen Zn-Komplex enthält, und eine zweite Beschichtungsschicht, die die anorganische Zn-Verbindung enthält, wobei die erste Beschichtungsschicht und die zweite Beschichtungsschicht getrennte Beschichtungsschichten auf dem Kern bilden; und
mindestens ein Teil der ersten Beschichtungsschicht zwischen dem Kern und der zweiten Beschichtungsschicht angeordnet ist.

4. Düngemittelgranulat nach einem der Ansprüche 1 bis 3, wobei:
die anorganische Zn-Verbindung in mikronisierten Teilchen enthalten ist; und
die mikronisierten Teilchen einen durchschnittlichen Durchmesser von 0,1 µm bis 100 µm, vorzugsweise 0,3 µm bis 50 µm, aufweisen.

5. Düngemittelgranulat nach einem der Ansprüche 1 bis 4, wobei der Kern einen Durchmesser von 1 mm bis 5 mm aufweist.

6. Düngemittelgranulat nach einem der Ansprüche 1(i), 1(ii), 1(iv) und 2 bis 5 mit 98,6 Gew.-% bis 99,9 Gew.-% Harnstoff.

7. Düngemittelgranulat nach einem der Ansprüche 1 bis 6 mit 0,01 Gew.-% bis 0,2 Gew.-% Zn, berechnet unter Verwendung der Gesamtmenge an Zn-Atomen in dem Granulat.

8. Düngemittelgranulat nach einem der Ansprüche 1 bis 7, wobei der organische Zink (Zn)-Komplex (NH₄)₂ZnEDTA (Diammonium [[N,N'-Ethylenbis[N-(carboxylatomethyl)glycinato]](⁴⁻)-N,N',O,O',ON,ON']Zinkat(²⁻)) und/oder (Na)₂ZnEDTA (Dinatrium-[[N,N'-Ethylenbis[N-(carboxylatomethyl)glycinato]](4-)-N,N',O,O',ON,ON']Zinkat(2-)) ist.

9. Düngemittelgranulat nach einem der Ansprüche 1 bis 8, das 99 Gew.-% bis 99,9 Gew.-% Harnstoff, 0,01 Gew.-% bis 0,6 Gew.-% ZnEDTA und 0,01 Gew.-% bis 0,2 Gew.-% ZnO und/oder ZnSO₄ enthält.

10. Düngemittelgranulat nach einem der Ansprüche 1 bis 9, wobei der Kern ferner einen Ureaseinhibitor und/oder einen Nitrifikationsinhibitor enthält.

11. Düngemittelgranulat nach einem der Ansprüche 1 bis 10, wobei:
der Kern 0,02 Gew.-% bis 0,1 Gew.-% eines Ureaseinhibitors und/oder 0,1 Gew.-% bis 1 Gew.-% eines Nitrifikationsinhibitors, bezogen auf das Gewicht des Kerns, enthält; und
der Ureaseinhibitor N-(n-Butyl)thiophosphorsäuretriamid (NBPT) und/oder der Nitrifikationsinhibitor Dicyandiamid (DCD) enthält.

12. Düngemittelmischung oder zusammengesetztes Düngemittel, das das Düngemittelgranulat nach einem der Ansprüche 1 bis 11 enthält.

13. Verfahren zur Herstellung des Düngemittelgranulats nach einem der Ansprüche 1 bis 11, wobei das Verfahren umfasst:
Bilden oder Bereitstellen eines Harnstoff enthaltenden Kerns;
Beschichten einer äußeren Oberfläche des Kerns mit einem organischen Zn-Komplex, um einen mit organischem Zn beschichteten Kern zu bilden; und
Beschichten einer äußeren Oberfläche des mit organischem Zn beschichteten Kerns mit mikronisierten Teilchen, die eine anorganische Zn-Verbindung umfassen, um das Düngemittelgranulat zu bilden.

14. Verfahren nach Anspruch 13, wobei eine wässrige Lösung, die 1 Gew.-% bis 20 Gew.-% des organischen Zn-Komplexes enthält, auf die äußere Oberfläche des Kerns aufgetragen wird, um den mit organischem Zn beschichteten Kern zu bilden.

15. Verfahren zum Düngen, wobei das Verfahren das Ausbringen eines Düngemittelgranulats nach einem der Ansprüche 1 bis 11 oder der Düngemittelmischung oder des zusammengesetzten Düngemittels nach Anspruch 12 auf mindestens einen Teil eines Bodens, einer Kultur oder des Bodens und der Kultur enthält.

## Revendications

1. Granulé d'engrais comprenant :
un noyau comprenant de l'urée, et
une enveloppe comprenant un complexe de zinc (Zn) organique et un composé de Zn inorganique, l'enveloppe formant un revêtement sur une surface extérieure du noyau, lequel complexe de zinc (Zn) organique est un complexe de Zn chélaté, lequel complexe de Zn chélaté comprend du Zn chélaté par l'acide éthylènediaminetétraacétique (EDTA), l'acide nitrilotriacétique (NTA), l'acide hydroxyéthylènediaminetriacétique (HEDTA), l'acide diéthylènetriaminepentaacétique (DTPA), l'acide 1,2-diaminocyclohexane tétraacétique (DCTA), l'acide éthylènediamine di-o-(hydroxyphénylacétique) (EDDHA), l'acide éthylène glycol bis(bêta-aminoéthyléther) tétraacétique ou la dihydroxyéthylglycine (DREG), ou un sel de ceux-ci, ou toute combinaison de ceux-ci ;
sachant que :
i) l'enveloppe comprend une première couche de revêtement comprenant le complexe de Zn organique et une deuxième couche de revêtement comprenant le composé de Zn inorganique, la première couche de revêtement et la deuxième couche de revêtement formant des couches de revêtement distinctes sur le noyau, et/ou
ii) le composé de Zn inorganique est constitué de particules micronisées, et/ou
iii) le granulé d'engrais comprend 99 % à 99,9 % en poids d'urée, 0,01 % à 0,6 % en poids de ZnEDTA et 0,01 % à 0,2 % en poids de ZnO et/ou de ZnSO₄ par rapport au poids du granulé d'engrais, et/ou
iv) le noyau comprend 0,02 % à 0,1 % en poids d'un inhibiteur d'uréase et/ou 0,1 % à 1 % en poids d'un inhibiteur de nitrification, par rapport au poids du noyau.

2. Granulé d'engrais selon la revendication 1, dans lequel le composé de Zn inorganique comprend ZnO, ZnSO₄, ZnCO₃, Zn(NO₃)₂, ZnCl₂, ou toute combinaison de ceux-ci, de préférence ZnO et/ou ZnSO₄.

3. Granulé d'engrais selon la revendication 1 ou 2, dans lequel :
l'enveloppe comprend une première couche de revêtement comprenant le complexe de Zn organique et une deuxième couche de revêtement comprenant le composé de Zn inorganique, la première couche de revêtement et la deuxième couche de revêtement formant des couches de revêtement distinctes sur le noyau, et
au moins une portion de la première couche de revêtement est agencée entre le noyau et la deuxième couche de revêtement.

4. Granulé d'engrais selon l'une quelconque des revendications 1 à 3, dans lequel :
le composé de Zn inorganique est constitué de particules micronisées, et
les particules micronisées ont un diamètre moyen de 0,1 µm à 100 µm, de préférence de 0,3 µm à 50 µm.

5. Granulé d'engrais selon l'une quelconque des revendications 1 à 4, dans lequel le noyau a un diamètre de 1 mm à 5 mm.

6. Granulé d'engrais selon l'une quelconque des revendications 1(i), 1(ii), 1(iv) et 2 à 5, comprenant 98,6 % à 99,9 % en poids d'urée.

7. Granulé d'engrais selon l'une quelconque des revendications 1 à 6, comprenant 0,01 % à 0,2 % en poids de Zn, calculé à partir de la quantité totale d'atomes de Zn dans le granulé.

8. Granulé d'engrais selon l'une quelconque des revendications 1 à 7, dans lequel le complexe de zinc (Zn) organique est (NH₄)₂ZnEDTA ([[N,N'-éthylènebis[N-(carboxylatométhyl)glycinato]](⁴)-N,N',O,O',ON,ON']zincate(²⁻) de diammonium) et/ou (Na)₂ZnEDTA ([[N,N'-éthylènebis[N-(carboxylatométhyl)glycinato]](4-)-N,N',O,O',ON,ON']zincate(2-) de disodium).

9. Granulé d'engrais selon l'une quelconque des revendications 1 à 8, comprenant 99 % à 99,9 % en poids d'urée, 0,01 % à 0,6 % en poids de ZnEDTA et 0,01 % à 0,2 % en poids de ZnO et/ou de ZnSO₄.

10. Granulé d'engrais selon l'une quelconque des revendications 1 à 9, dans lequel le noyau comprend en outre un inhibiteur d'uréase et/ou un inhibiteur de nitrification.

11. Granulé d'engrais selon l'une quelconque des revendications 1 à 10, dans lequel :
le noyau comprend 0,02 % à 0,1 % en poids d'un inhibiteur d'uréase et/ou 0,1 % à 1 % en poids d'un inhibiteur de nitrification, par rapport au poids du noyau, et
l'inhibiteur d'uréase comprend du triamide N-(n-butyl) thiophosphorique (NBPT) et/ou l'inhibiteur de nitrification comprend du dicyandiamide (DCD).

12. Mélange d'engrais ou engrais composé comprenant le granulé d'engrais selon l'une quelconque des revendications 1 à 11.

13. Procédé de production du granulé d'engrais selon l'une quelconque des revendications 1 à 11, le procédé comprenant :
la formation ou la fourniture d'un noyau comprenant de l'urée,
le revêtement d'une surface extérieure du noyau avec un complexe de Zn organique pour former un noyau revêtu de Zn organique, et
le revêtement d'une surface extérieure du noyau revêtu de Zn organique avec des particules micronisées comprenant un composé de Zn inorganique pour former le granulé d'engrais.

14. Procédé selon la revendication 13, dans lequel une solution aqueuse comprenant 1 % à 20 % en poids du complexe de Zn organique est revêtue sur la surface extérieure du noyau pour former le noyau revêtu de Zn organique.

15. Procédé de fertilisation, le procédé comprenant l'application d'un granulé d'engrais selon l'une quelconque des revendications 1 à 11 ou du mélange d'engrais ou de l'engrais composé selon la revendication 12 sur au moins une portion d'un sol, d'une culture, ou du sol et de la culture.
